# EUROPÄISCHE PATENTSCHRIFT

(11) **EP 1 733 843 B1**
(45) Veröffentlichungstag und Bekanntmachung des Hinweises auf die Patenterteilung: **24.10.2007**
(21) Anmeldenummer: 06011831.2
(22) Anmeldetag: 08.06.2006
(51) Int. Cl.: B24B 9/10, B24B 27/00

(54) **Verfahren und Vorrichtung zum Entfernen des Kunststofffolienüberstandes bei Verbundglasplatten**
Method and device for the removal of the protruding edge of a plastic sheet of laminated glass panels
Procédé et dispositif pour enlèver les parties débordantes d'une feuille intercalaire en matière plastique d'un panneau de verre laminé

(30) Priorität: 16.06.2005 DE 102005027964
(43) Veröffentlichungstag der Anmeldung: 20.12.2006
(73) Patentinhaber: Lisec Maschinenbau GmbH, 3353 Seitenstetten (AT)
(72) Erfinder: Lisec, Peter, 3363 Hausmening-Amstetten (AT)
(74) Vertreter: Prietsch, Reiner

(56) Entgegenhaltungen:
- EP-A- 0 847 834
- EP-A- 1 038 634
- EP-A- 1 175 957
- US-A- 1 910 748
- US-A- 5 109 632
- US-A- 5 704 959
- PATENT ABSTRACTS OF JAPAN Bd. 1996, Nr. 12, 26. Dezember 1996 (1996-12-26) & JP 08 197402 A (MITSUBOSHI DAIYAMONDO KOGYO KK), 6. August 1996 (1996-08-06)

## Beschreibung

Die Erfindung betrifft ein Verfahren zum Entfernen des randseitigen Überstandes der Kunststofffolie zwischen den Scheiben einer Verbundglasplatte. Ein derartiges Verfahren ist aus EP 1 038 634 A2 bekannt.

Verbundglasplatten bestehen aus zwei oder mehr Tafel- oder Spiegelglasscheiben, die mit einer Kunststoffolie zusammengeklebt sind. Herstellungsbedingt steht die Kunststofffolie an allen Rändern der rohen Verbundglasplatte etwa 1 bis 2 mm unregelmäßig über. Da in der Regel alle weiteren Verarbeitungsschritte, insbesondere die Gewinnung der jeweils benötigten Verbundglasplattenzuschnitte oder -formate, eine exakte Positionierung und Führung der rohen Verbundglasplatte über einen ihrer beiden Längsränder erfordern, muss der Kunststofffolienüberstand, nachfolgend kurz Überstand, entfernt werden, unabhängig davon, ob die Verbundglasplatte liegend oder stehend (in diesem Fall wie üblich leicht geneigt gegen die Lotrechte) weiterverarbeitet wird. Bisher wird der Überstand mühevoll und zeitraubend von Hand entfernt, nämlich mittels einer scharfen Klinge abgeschnitten. Versuche, den Überstand mit anderen Mitteln, z.B. durch Abflämmen, zu entfernen, haben sich nicht als praktikabel erwiesen.

DE 692 25 016 T2 offenbart zur Entfernung des Überstandes die Verwendung eines Schleifbandes, welches quer zum Rand der Verbundglasscheibe geführt ist. Das Schleifband wird durch eine aufgebrachte Belastung gegen den Umfangsrand des Fensters gedrückt und ist in diesem Bereich nicht unterstützt, um ein Biegen des Bandes um die Kante zu bewirken.

Das hat jedoch zur Folge, dass der maximale Anpressdruck des Schleifbandes im Bereich der Kanten des Umfangrandes wirkt. Dadurch werden die ansonsten rechtwinkligen Kanten des Umfangrandes des Fensters abgerundet. Um dieser Rundung entgegenzuwirken wird vorgeschlagen, ein Band mit milden Schleifeigenschaften zu verwenden. Da solche Bänder geringere Standzeiten haben, muss das Band oft gewechselt werden, was Rüstkosten verursacht.

Aus der US 2 022 530 ist ein Verfahren zur Herstellung von Verbundglasplatten bekannt, bei dem zunächst ein kontinuierlicher Kanal auf dem Umfangsrandbereich der Verbundglasplatte durch randseitiges Entfernen der Verbundstofffolie zwischen den Platten ausgebildet wird. Anschließend wird der Kanal mit Pech verfüllt. Überschüssiges Pech wird mit einem abrasiven Werkzeug entfernt.

Aus GB 2 144 363 A ist ein Verfahren der eingangs genannten Gattung bekannt. Der randseitige Überstand der Kunststofffolie wird mit einem umlaufenden Bandmesser abgeschnitten.

Der Erfindung liegt die Aufgabe zugrunde, ein Verfahren und eine insbesondere zu dessen Durchführung geeignete Vorrichtung bereitzustellen, die es ermöglichen, den Kunststofffolienüberstand maschinell, schnell, kostengünstig und präzise zu entfernen.

Diese Aufgabe ist verfahrensmäßig durch die im Patentanspruch 1 angegebenen Merkmale gelöst.

Aus EP 1 038 634 A2 ist bekannt, dass der Überstand sich mit einem rotierenden abrasiven Werkzeug entfernen lässt, obwohl die Kunststofffolie relativ weich und vor allem stark adhäsiv ist sowie einen niedrigen Schmelzpunkt hat.

Als Werkzeug wird eine rotierende Schleifscheibe verwendet. Bewährt haben sich Schleifscheiben mit kunststoff- und insbesondere elastomergebundenen, gekörnten Schleifmitteln.

Unter den zahlreichen, handelsüblichen Schleifscheiben unterschiedlicher Zusammensetzung eignen sich diejenigen, die die Ränder der Verbundglasplatte höchstens nur unerheblich angreifen, was durch Versuch leicht ermittelbar ist.

In der Regel reicht es, dass der Kunststofffolienüberstand nur an zwei zueinander rechtwinkligen Rändern der (rohen) Verbundglasplatte abgetragen wird, denn die beiden verbleibenden Ränder sind diejenigen eines Längsstreifens und eines Querstreifens, die jeweils nach erfolgtem Zuschnitt als unverwertbarer Rest bleiben.

Der Kunststofffolienüberstand wird am besten durch eine translatorische Relativbewegung zwischen dem rotierenden Werkzeug und der Verbundglasplatte fortschreitend abgetragen.

Hierzu kann in einem ersten Schritt das rotierende erste Werkzeug bei ruhender Verbundglasplatte an einem ersten Rand derselben translatorisch entlang geführt werden und in einem zweiten Schritt kann die Verbundglasplatte mit einem ihrer zu dem ersten Rand rechtwinkligen Ränder translatorisch (in X-Richtung) an dem ortsfesten Werkzeug oder an einem zweiten ortsfest montierten rotierenden Werkzeug entlang geführt werden. Diese Schritte können auch in umgekehrter Reihenfolge durchgeführt werden. Grundsätzlich genügt ein rotierendes Werkzeug, das zunächst einen Rand, z.B. den in Quer- oder Y-Richtung verlaufenden Rand der Verbundglasplatte, abfährt, jedoch auch in eine feste Position relativ zu dem anderen Rand der Verbundglasplatte gebracht werden kann, die dann mit ihrem zweiten Rand an dem Werkzeug in X-Richtung entlangtransportiert wird.

Zweckmäßig werden die abgetragenen Partikel des Überstandes in unmittelbarer Nähe des rotierenden Werkzeugs abgesaugt.

Bevorzugt wird der Kunststofffolienüberstand unter Benutzung der Transport- und gegebenenfalls auch der Fixiermittel, z.B. der Sauger, einer Ritz- oder einer kombinierten Ritz- und Brechstation abgetragen.

Die eingangs genannte Aufgabe wird des Weiteren durch eine Vorrichtung mit dem im Anspruch 6 angegebenen Merkmale gelöst.

Die Auflage- oder Abstützfläche für die Verbundglasplatte ist die Tischfläche oder die leicht gegen die Lotrechte geneigte seitliche Abstützfläche einer Ritz- oder Brechstation. Die Transportmittel können bei liegend bearbeiteter und transportierter Verbundglasplatte z.B. die an sich bekannten, in die Tischfläche integrierten oder diese bildenden Transportbänder, bei stehend bearbeiteter und transportierter Verbundglasplatte die Rollen oder anderen Horizontalförderer einer derartigen Station sein. Im Bereich eines Längsrandes der Auflage- oder Abstützfläche, bei stehender Bearbeitung vorzugsweise im Bereich des Unterrandes, ist die rotierende, abrasive Scheibe des Werkzeuges so angeordnet, dass sie mit ihrer abtragenden Umfangsfläche einen Längsrand der Verbundglasplatte gerade tangential berührt, so dass der Transport der Verbundglasplatte entlang der rotierenden Scheibe zum randscharfen Abtrag deren Kunststofffolienüberstandes führt. Der ein gleichartiges rotierendes Werkzeug tragende Schlitten ist rechtwinklig zur Transportrichtung (X-Richtung), entlang dem bezogen auf die Transportrichtung der Verbundglasplatte vorderen Rand derselben auf einem Führungsholm oder einer Führungssäule in Y-Richtung verschiebbar. Um dem Werkzeug bzw. dessen rotierender Scheibe ausreichend Raum zu geben, hat die Auflage- oder Abstützfläche in Höhe dieses Werkzeuges einen Schlitz oder ist geteilt. Weiter hat die Auflage-oder Abstützfläche an einem ihrer zur Transportrichtung der Verbundglasplatte parallelen Seitenränder vorzugsweise eine Anschlagleiste zur Positionierung und Geradeführung der Verbundglasplatte während ihres Transportes.

In dieser Ausführung ist die Vorrichtung ein weitgehend integrierter Bestandteil einer vorhandenen Ritz- und/oder Brechstation. Das zweite Werkzeug kann z.B. an dem gleichen Schlitten montiert sein wie das Ritzwerkzeug.

Unter der Voraussetzung, dass der Schlitten in eine Endposition verfahrbar ist, in der die Umfangsfläche der abrasiven Scheibe einen Längsrand der Verbundglasplatte tangential berührt, kann das gleiche Werkzeug zur Entfernung des Kunststofffolienüberstandes sowohl von dem in Transportrichtung vorderen (Quer-)Rand als auch von dem dazu rechtwinkligen Längsrand der Verbundglasplatte verwendet werden.

Ebenfalls nur ein einziges Werkzeug mit einer rotierenden Scheibe wird dann benötigt, wenn der das Werkzeug tragende Schlitten nicht nur rechtwinklig zur Plattentransportrichtung verschiebbar ist sondern auf einer Brücke sitzt, die ihrerseits auch in Plattentransport-, also in X-Richtung verfahrbar ist, so dass das Werkzeug bei längsrandseitig positioniertem Schlitten mindestens einen Längsrand der Verbundglasplatte abfahren kann, während diese stillsteht und durch geeignete Mittel. z.B. Vakuumsauger, in ihrer vorgegebenen Ausrichtung fixiert ist.

Wie inzwischen weitgehend üblich, können alle Positionierungen und Transport- sowie Bearbeitungsvorgänge numerisch gesteuert, d.h. vollautomatisch, vorgenommen werden.

Dem Werkzeug und insbesondere jeder rotierenden Scheibe desselben können mindestens eine rotierende Bürste und/oder eine Absaugvorrichtung zugeordnet sein, so dass eine Verschmutzung der Verbundglasplatte und eine Belastung der Arbeitsumgebung durch die abgetragenen Partikel des Kunststofffolienüberstandes und Abrieb von der abrasiven Scheibe vermieden wird.

Als Antriebe für die rotierenden Scheiben eignen sich aufgrund ihrer hohen, hier vorteilhaften Drehzahl insbesondere Druckluftmotore.

## Patentansprüche

1. Verfahren zum Entfernen des randseitigen Überstandes der Kunststofffolie zwischen den Scheiben einer Verbundglasplatte durch randscharfes Abtragen des Kunststofffolienüberstands mittels mindestens einer rotierenden abrasiven Schleifscheibe, **dadurch gekennzeichnet, dass** in einem ersten Schritt die rotierende Schleifscheibe bei ruhender Verbundglasplatte an einem ersten Rand derselben translatorisch entlang geführt wird und dass in einem zweiten Schritt die Verbundglasplatte mit einem ihrer zu dem ersten Rand rechtwinkligen Ränder translatorisch an der ortsfest rotierenden Schleifscheibe oder an einer zweiten ortsfest montierten rotierenden Schleifscheibe entlang geführt wird.

2. Verfahren nach Anspruch 1, **dadurch gekennzeichnet, dass** für die Schleifscheibe ein die Ränder der Verbundglasplatte höchstens nur unerheblich angreifendes abrasives Material verwendet wird.

3. Verfahren nach Anspruch 1 oder 2, **dadurch gekennzeichnet, dass** der Kunststofffolienüberstand nur an zwei zueinander rechtwinkligen Rändern der Verbundglasplatte abgetragen wird.

4. Verfahren nach einem der Ansprüche 1 bis 4, **dadurch gekennzeichnet, dass** die abgetragenen Partikel des Kunststofffolienüberstandes abgesaugt werden.

5. Verfahren nach einem der Ansprüche 1 bis 5, **dadurch gekennzeichnet, dass** der Kunststofffolienüberstand unter Benutzung der Transportmittel einer Ritz- oder einer kombinierten Ritz- und Brechstation abgetragen wird.

6. Vorrichtung zum Entfernen des randseitigen Überstandes der Kunststofffolie zwischen den Scheiben einer Verbundglasplatte, insbesondere zur Durchführung des Verfahrens nach einem der Ansprüche 1 bis 5, mit einer Auflage- oder Abstützfläche für die Verbundglasplatte, **dadurch gekennzeichnet, dass** die Auflage- oder Abstützfläche diejenige einer Ritz- oder Brechstation ist, die Folgendes umfasst: ein Transportmittel zum linearen Bewegen der Verbundglasplatte auf oder entlang dieser Fläche, ein am Rand dieser Fläche ortsfest montiertes Werkzeug mit einer rotierenden abrasiven Scheibe, die mit einer Umfangsfläche einen Längsrand der Verbundglasplatte tangential berührt und einen rechtwinklig zur Transportrichtung, in Richtung der Querabmessung der Verbundglasplatte, verfahrbaren Schlitten, der ein zweites, gleichartiges Werkzeug trägt.

7. Vorrichtung nach Anspruch 6, **dadurch gekennzeichnet, dass** jedem Werkzeug wenigstens eine vorzugsweise rotierende Bürste zugeordnet ist.

8. Vorrichtung nach einem der Ansprüche 6 oder 7, **dadurch gekennzeichnet, dass** jedem Werkzeug eine Absaugvorrichtung zugeordnet ist.

## Claims

1. A method of removing the protruding edge portion of the plastic sheet between the panes of a laminated glass panel by removal of the protruding plastic sheet portion to give a sharp edge by means of at least one rotating abrasive grinding wheel, **characterised in that** in a first step with the laminated glass panel stationary the rotating grinding wheel is guided with a translatory movement along a first edge of the laminated glass panel and that in a second step the laminated glass panel is guided with a translatory movement with one of its edges at a right angle to the first edge along the stationarily rotating grinding wheel or along a second stationarily mounted rotating grinding wheel.

2. A method according to claim 1 **characterised in that** an abrasive material which at most only insignificantly engages the edges of the laminated glass panel is used for the grinding wheel.

3. A method according to claim 1 or claim 2 **characterised in that** the protruding plastic sheet portion is removed only at two mutually perpendicular edges of the laminated glass panel.

4. A method according to one of claims 1 to 4 **characterised in that** the removed particles of the protruding plastic sheet portion are sucked away.

5. A method according to one of claims 1 to 5 **characterised in that** the protruding plastic sheet portion is removed using the transport means of a scratching station or a combined scratching or breaking station.

6. Apparatus for removing the protruding edge portion of the plastic sheet between the panes of a laminated glass panel, in particular for carrying out the method according to one of claims 1 to 5, comprising a contact or support surface for the laminated glass panel, **characterised in that** the contact or support surface is that of a scratching or breaking station, which includes the following: a transport means for linear movement of the laminated glass panel on or along said surface, a tool mounted stationarily at the edge of said surface and having a rotating abrasive wheel which with a peripheral surface tangentially touches a longitudinal edge of the laminated glass panel and a carriage which is displaceable at a right angle to the transport direction, in the direction of the transverse dimension of the laminated glass panel, and which carries a second similar tool.

7. Apparatus according to claim 6 **characterised in that** at least one preferably rotating brush is associated with each tool.

8. Apparatus according to one of claims 6 and 7 **characterised in that** a suction removal device is associated with each tool.

## Revendications

1. Procédé pour éliminer les dépassements aux bords du film plastique intercalaire entre les vitres d'une plaque de verre feuilleté en enlevant à ras du bord le film plastique dépassant au moyen d'au moins un disque abrasif rotatif, **caractérisé en ceci** que, dans une première étape, ledit disque rotatif est conduit en translation le long d'un premier bord de la plaque de verre feuilleté, ladite plaque de verre feuilleté étant au repos, et en ceci que, dans une seconde étape, ladite plaque de verre feuilleté est conduite avec un de ses bords, perpendiculaire au premier bord, le long du disque abrasif rotatif fixe ou d'un second disque abrasif rotatif monté de manière fixe.

2. Procédé selon la revendication 1, **caractérisé en ceci** que, pour ledit disque abrasif rotatif, on utilise un matériau abrasif attaquant au plus de manière minime les bords de ladite plaque de verre feuilleté.

3. Procédé selon la revendication 1 ou 2, **caractérisé en ceci** que ledit film plastique dépassant n'est retiré que le long de deux bords perpendiculaires entre eux.

4. Procédé selon une des revendications 1 à 4, **caractérisé en ceci** que les particules dudit film plastique dépassant retirées sont aspirées.

5. Procédé selon une des revendications 1 à 5, **caractérisé en ceci** que ledit film plastique dépassant est retiré en utilisant les moyens de transport d'une station à tracer ou d'une station combinée à tracer et à casser.

6. Dispositif pour retirer les dépassements aux bords du film plastique intercalaire entre les vitres d'une plaque de verre feuilleté, en particulier en effectuant le procédé selon une des revendications 1 à 5 comportant un plan d'appui ou de support pour la plaque de verre feuilleté, **caractérisé en ceci** que ledit plan d'appui ou de support est celui d'une station à tracer ou à casser comprenant ce qui suit : un moyen de transport pour le déplacement linéaire de la plaque de verre feuilleté le long dudit plan, un outil monté de manière fixe au bord dudit plan avec un disque abrasif rotatif, qui touche tangentiellement avec une des surfaces de contour un des bords longitudinaux de ladite plaque de verre feuilleté, et un chariot pouvant être déplacé perpendiculairement à la direction de transport, dans la direction de la dimension transversale de ladite plaque de verre feuilleté, et portant un second outil du même genre.

7. Dispositif selon la revendication 6, **caractérisé en ceci** qu'à chaque outil, au moins une brosse, de préférence rotative, est affectée.

8. Dispositif selon une des revendications 6 ou 7, **caractérisé en ceci** qu'à chaque outil un dispositif d'aspiration est affecté.
